# EUROPEAN PATENT APPLICATION

(11) **EP 4 585 843 A1**
(43) Date of publication of application: **16.07.2025**
(21) Application number: 25151911.2
(22) Date of filing: 15.01.2025
(51) Int. Cl.: F16M 7/00, B66F 3/08, F16M 11/28, B60S 9/08

(54) **AXLE STAND FOR SUPPORT OF A RECREATIONAL VEHICLE**

(30) Priority: 15.01.2024 BE 202405015
(71) Applicant: JVE Management BV, 2460 Kasterlee (BE)
(72) Inventor: VAN EYCK, Julius, 2460 Kasterlee (BE)
(74) Representative: IP HILLS NV

(57) **Abstract**

Disclosed according to an embodiment is an axle stand (100) configured for support of a recreational vehicle (400) on a surface, comprising a stand foot (105), an adjustment system (102, 103) and a stand shaft (104) which comprises a spindle that comprises a screw thread, the adjustment system comprising an adjusting nut (103) which is configured such that, via a rotating movement in relation to the spindle, it adjusts the height of the stand shaft (104) with respect to the stand foot (105), the adjusting nut (103) comprising a first cylindrical bore (201) along an axial direction that is provided with a screw thread corresponding to that of the spindle, characterized in that the adjusting nut (103) further comprises a second cylindrical even bore (202, 203) along a direction inclined in relation to the axial direction of the first bore (201) and intersecting it, wherein the diameter is at least equal to the outer diameter of the spindle.

## Description

### Technical field

The present invention relates to an axle stand for stabilization of a recreational vehicle on a surface.

More particularly, the present invention relates to an improved axle stand for efficient and convenient placement thereof under a recreational vehicle.

### Prior art

An axle stand is a mechanical apparatus that can be placed under a recreational vehicle. The apparatus provides for better stability of the recreational vehicle, for example if it remains in the same place for a relatively long period of time. A recreational vehicle is for example a caravan, a motorhome, also referred to as a camper or mobile home, or a trailer with a roof tent, also referred to as a tent trailer or a popup camper.

What is typical of a recreational vehicle is that it is transported on public roads to a particular location and then left standing for a certain period of time. A known example is a caravan at a campsite. Another example is a camper in a place accordingly provided for, for example, spending the night before continuing a trip, but equally at a campsite.

When a recreational vehicle is placed on the surface of the location for a certain period of time, it is intended that persons can move freely within it. Consequently, it is important for the recreational vehicle to be stabilized in a safe and robust manner. Put differently, the recreational vehicle needs to be supported along the bottom side in such a way that persons in a comfortable manner and without danger of the recreational vehicle starting to tilt towards a particular side. In other words, the support serves to stabilize the recreational vehicle.

According to the state of the art, various systems for supporting a recreational vehicle on a surface are known.

US4216939A discloses a system for stabilizing and supporting a recreational vehicle with use being made of a liquid-driven cylinder that is driven for a master cylinder.

US3489428A discloses a stabilizing support for support of a tent trailer comprising an extendable leg that is pivotable between a retracted position and a dependent locked position, wherein, when extended, the leg can come into contact with a surface, and provided with a lever-operated jack.

US5992824A discloses a jack for lifting heavy vehicles, comprising a base, a jack column on the base and provided with a liquid-actuated piston and cylinder device for extending and retracting the column, wherein the column comprises a stationary part which is mounted on the base and a moving part that is slidably coupled.

Finally, US2011024706A1 discloses a stabilization jack for stabilizing a recreational vehicle, comprising a levelling cylinder, a pump and a liquid reservoir sealed off within a common housing. Within the housing, there is also a piston which can bring a rod into contact with a ground surface via the pump by means of a hydraulic system.

Various disadvantages of the existing mechanisms for supporting a recreational vehicle have been identified.

If a hydraulic system is used, there is a risk that leaks may occur with the fluid in the system, often oil, being able to cause contamination in the environment where the recreational vehicle is set up, as well as on public roads during the transportation thereof. In addition to the contamination, the supporting mechanism is also made inoperable.

If a purely mechanical system is used, that is to say in the absence of a hydraulic system, a disadvantage is that a user has to perform multiple cumbersome manipulations to ensure a firm and stable support.

There is therefore a need for a support mechanism whereby a recreational vehicle can be supported in a convenient and efficient manner and wherein the number of manipulations is reduced to a minimum.

It is therefore an object of the present invention to provide for a device and a method for supporting a recreational vehicle that overcomes one or more of the described disadvantages of state-of-the-art solutions.

### Summary of the invention

According to the present invention, the object identified above is achieved by providing, according to a first aspect of the invention, an axle stand according to Claim 1, the axle stand being configured for support of a recreational vehicle on a surface and comprising a stand foot, an adjustment system and a stand shaft which comprises a spindle that comprises a screw thread, the adjustment system comprising an adjusting nut which is configured such that, via a rotating movement in relation to the spindle, it adjusts the height of the stand shaft with respect to the stand foot, the adjusting nut comprising a first cylindrical bore along an axial direction that is provided with a screw thread corresponding to that of the spindle, characterized in that the adjusting nut further comprises a second cylindrical even bore along a direction inclined in relation to the axial direction of the first bore and intersecting it, wherein the diameter is at least equal to the outer diameter of the spindle.

The present invention is described using particular terms or definitions. Here, "direction" is to be understood as meaning the (imaginary) line along which movement is possible, while "sense" is to be understood as meaning the side of this line, indicated by the direction, towards which movement is performed.

Furthermore, terms are used to define the invention as a whole as well as the components thereof. For instance, the term *axle stand* refers to the entire support mechanism, while *stand shaft* refers to a component thereof.

The term axle stand is a known term within the field of recreational vehicles and refers to the entire support mechanism for offering a recreational vehicle such as a camper or a caravan greater support and stability. It is often the case here that use is made of a set of four axle stands, with an axle stand then being placed under the recreational vehicle at each corner point. Alternatively, it is possible for provision to be made of just two axle stands under the recreational vehicle at the rear. As will be explained in more detail, the axle stand consists of various mechanical components,of which one portion may be connected robustly to one another, and another portion may be intended for a non-robust connection. Robust is to be understood as meaning that, when the axle stand is handled in a normal and appropriate manner, the components remain connected to one another. Non-robust is to be understood as meaning that the components can be uncoupled from one another in a normal manner. Use may be made for this purpose of various techniques, such as clamping, use of bolts and nuts with corresponding screw threads, welded connections and other techniques as known in the state of the art.

As will be explained in more detail, the axle stand therefore comprises the components of a stand foot, an adjustment system and a stand shaft. The stand foot, the adjustment system and the stand shaft then form the axle stand when assembled.

The axle stand is configured to be placed on a surface by means of the stand foot. In other words, the stand foot is placed on the surface on which the recreational vehicle is positioned and on which it will be placed in a stable manner, in other words stabilized. This means that it offers support and stability.

The stabilization is realized by having the stand shaft of the axle stand act or press on or against the bottom side of the recreational vehicle, after which the height of the stand shaft can then be adjusted with respect to the stand foot. Action or pressing means that there is a mechanical contact between the axle stand and the vehicle and that, after stabilization, the vehicle, optionally partly, rests on the one or more axle stands.

Adjustment means that the configuration can be changed at any desired moment. In the context of the present invention, this means that the height of the stand shaft can be changed with respect to the stand foot and this can be clamped in a stable manner between the surface and the recreational vehicle, after which, when and before the recreational vehicle is moved again, the axle stand can be removed for reuse at a later point in time.

The height of a stand shaft as known in the state of the art is adjusted by means of an adjusting nut. The stand shaft comprises a spindle, which means that provision is made of a screw thread on the outside thereof over a certain length. It is also the case that the adjusting nut has a screw thread on the inside, said screw thread corresponding to the screw thread of the spindle. The height adjustment is then realized by rotating the adjusting nut, which moves it upwards or downwards over the spindle according to the direction of rotation.

Note that the adjusting nut may also be referred to as a clamping nut or quick-action clamping nut.

The axle stand is made of a material which offers sufficient strength but is not too heavy in terms of mass to additionally be able to be transported efficiently, as well as to be placed under a recreational vehicle and subsequently removed. The material is for example aluminium. Alternatively, it is possible for the stand shaft and the adjustment system to be made of aluminium and for the stand foot to be made of hard plastic. However, it should be understood that the material of which the axle stand is made does not constitute a restriction on the invention.

Adjusting nut is to be understood as meaning a nut or ring provided with a screw thread on the inside thereof. This may therefore be a nut comprising a hexagonal outer side, but this need not be limited to this embodiment, as will be explained in more detail. Other shapes on the outside, such as for example a smooth shape like a ring, are also possible.

The turning or rotating movement of the adjusting nut in relation to the spindle may be realized with the aid of a spanner, but preferably this is realized by means of a lever, as will be explained in more detail.

In order for the axle stand to be placed under the recreational vehicle, the stand shaft must first be set to a low position. This low position is required to allow the axle stand to be placed over the recreational vehicle. Using the principle of the spindle and the adjusting nut for an axle stand, as known in the prior art, continuous rotation by a user is subsequently necessary to bring the stand shaft to a higher position so as to finally be able to clamp it for support purposes, as already explained above. This is a disadvantage because the user then either already has to bring the stand shaft to a high position in order, subsequently, for the axle stand, if situated on the surface, to have to be raised to a limited extent, or has to bring the stand shaft, if situated on the surface, from a low position all the way up to the high position.

According to a new and innovative aspect, the adjusting nut of the axle stand further comprises a second even bore along a direction inclined in relation to the axial direction of the first bore and intersecting it, wherein the diameter is at least equal to the outer diameter of the spindle.

An even bore means that no screw thread is provided, but that the surface on the inside of the bore is smooth or even. Inclined means that this second bore is situated obliquely in relation to the axial direction of the first bore, in other words that there is an angle between the axial direction and this inclined direction. Preferably, said angle is between π/18 and π/4 rad. Intersecting means that the first and second bores partially overlap, that is to say that the second bore partially extends through the first bore.

Note that the screw thread of the adjusting nut corresponds to that of the spindle. A consequence or effect of this second bore is that part of the screw thread of the first bore of the adjusting nut will be removed by this second bore. This then results in an adjusting nut with a screw thread at a top side and at a bottom side, which are furthermore situated radially opposite one another. The places where there is then no screw thread are even or smooth, and along a direction of the second bore.

The advantage of this new and innovative aspect will now be discussed in more detail.

The provision of this second even inclined bore with a diameter at least equal to the outer diameter of the spindle allows the stand shaft to slide in this second bore without the adjusting nut needing to be turned. For this purpose, the user needs to incline the stand shaft in relation to the axial direction of the adjusting nut. This inclination will cause the screw thread between the spindle and the screw thread of the adjusting nut to come loose, which means that there is no longer a mechanical connection between the respective screw threads and whereby the spindle can then slide in the second bore, as already mentioned.

The inclination may be realized by firmly holding the stand foot and inclining the spindle as well as by firmly holding the spindle and inclining the stand foot, according to the selected reference. It should be clear that, from a mechanical point of view, the same effect is achieved.

In order to further explain the advantage of this new and innovative aspect, the method for placing the axle stand under the recreational vehicle will now be discussed.

The stand shaft of the axle stand is set in a low position in relation to the stand foot. In other words, the top side of the stand shaft, which will push against the bottom side of the recreational vehicle, is brought as close to the stand foot as possible. The new and innovative aspect makes it possible for this to be realized in a convenient and quick manner by inclining the spindle and then allowing the latter to drop downwards. The entire axle stand can then be brought under the recreational vehicle. Afterwards, the top side of the stand shaft is held against the bottom side of the recreational vehicle, and the stand foot is inclined with the spindle coming to lie in the second bore. Consequently, the stand foot slides downwards to the surface on which the recreational vehicle is positioned. The quick-action clamping nut is tilted automatically due to gravitational force. If the axle stand is not supported or standing on a surface, the stand foot will fall downwards together with the quick-action clamping nut. Thus, as the stand shaft and the stand foot move further apart, the quick-action clamping nut rattles down. This loosening and clamping thus proceeds automatically and therefore no separate action is required for this purpose. The screwing and unscrewing then takes place manually.

Subsequently, the stand foot is inclined or tilted again in such a way that it stands stably at its bottom side on the surface and the spindle comes to lie in the first bore. In this way, the spindle, by way of its screw thread, again comes into contact with the screw thread of the adjusting nut, this corresponding set of screw threads are snap-fitted to one another and, via a rotating movement of the adjusting nut, the axle stand can be clamped between the surface and the bottom side of the recreational vehicle.

According to an embodiment, the axes of the respective cylindrical bores are skew lines.

As is known, a cylinder is a geometrical body with a circular base and, parallel to the base, everywhere the same circular cross section, with all the centres on a straight line called the axis. The two bores are cylindrical bores, so that the above conditions are satisfied. In the presence of a screw thread, such as at the first bore, the circular cross section is then for example the inner diameter of the screw thread. It should therefore be understood that a cylinder can be defined over the length of the bore where the imposed mathematical conditions can be satisfied.

The axes of the cylindrical bores are then respective line segments that lie on the respective lines that pass through the respective centres. These straight lines are skew lines, that is to say straight lines that are not parallel, do not coincide and do not intersect one another. The bores are then formed in such a way that the axes do not cross. The advantage of this is that, when the spindle is inclined to position it in the second bore, the risk of damaging the screw thread of the first bore is reduced.

As will now be explained in more detail, the rotating movement can be performed in various ways. Use is made for this purpose of a lever which is configured to allow rotation of the adjusting nut in relation to the spindle.

A first possibility is the provision of a spanner, also referred to as an open-end spanner, wherein the width of the jaw corresponds to the hexagonal outer face of the adjusting nut if it is of this type. If the adjusting nut comprises a ring, provision may be made of an adjustable spanner, such as for example a box spanner, or some other tool suitable for clamping around a ring in order for a rotational movement to be performed.

However, it is preferable to have two alternatives for the provision of the lever, as explained below.

In a first preferred embodiment, the lever is connected robustly to the adjusting nut. A ring is then fitted around the adjusting nut, or even more preferably the ring comprises the adjusting nut and this consists of a mechanical unit. The lever then comprises one or two handles for the performing of the rotating movement. The advantage of this is that this then forms a unit with the axle stand when assembled, whereby the chance of this component being lost during transport is reduced. The handles may futhermore be arranged in a hinged manner in order thus to minimize the volume taken up by the axle stand when it is stored.

In a second preferred embodiment, a bore in which the lever can be inserted is provided in the spindle. The lever is then for example a round rod for allowing rotation of the spindle in relation to the adjusting nut when the rod is inserted into the bore.

According to an embodiment, the axle stand further comprises a stand shoe which is configured for support of an axle and/or chassis of the recreational vehicle.

As already mentioned above, the axle stand may consist of aluminium. The top side of the stand shaft will push against the bottom side of the recreational vehicle, also known as chassis, when the axle stand is used. In order to avoid damage to the recreational vehicle, on the one hand, and in order to be able to allow support of the top side of the stand shaft in a practical way, on the other hand, a stand shoe is provided at the top side. This stand shoe may correspond in terms of form to, for example, an axle of the recreational vehicle. Furthermore, this may be made for example of a soft plastic to avoid damage.

Moreover, the stand shoe may also comprise a magnet, optionally in combination with the soft plastic.

An advantage of the magnet is that the entire axle stand can be adhered magnetically as it were to the bottom side of the recreational vehicle, whereupon the stand shaft is then immobilized, the stand foot is inclined so that the stand shaft comes to lie in the second bore, and the stand foot is subsequently moved downwards to the surface. The stand foot is then inclined again so that the stand shaft comes to lie in the first bore. As a final step, the adjusting nut then needs to be turned in such a way that the axle stand is clamped between the surface and the recreational vehicle for stability.

As already explained, the stand foot needs to be placed on the surface. For this purpose, the stand foot comprises in terms of form a pyramid, also referred to as a prismatoid. A pyramid is a mathematical spatial figure consisting of a regular or irregular polygon as a base and triangular lateral faces from each of the sides of the polygon to a common point, the top, also referred to as the apex or apical point. The base of the pyramid is to be placed on the surface, and the top is configured to support the adjusting nut. This also implies that the stand shaft passes through the top. The base is preferably a quadrilateral.

Other forms of the stand foot are also possible, such as for example partially flattened at the bottom side thereof. This can be practical when the surface itself is not completely flat.

Moreover, according to an embodiment, the base of the stand foot may comprise hooks configured for gripping at the surface on which the recreational vehicle stands when placed thereon. The hooks can provide for further stability, safety and sturdiness. The hooks may furthermore be arranged in a hinged manner to push them into the ground via the hinge action.

Furthermore, the axle stand may also comprise a bottom plate which is placed on the surface and on which the axle stand then rests.

### Brief description of the drawings

The invention will be illustrated in more detail with reference to the figures, in which
Figure 1 illustrates an axle stand according to an embodiment of the invention;
Figure 2A illustrates a stand shaft according to an embodiment of the invention;
Figure 2B illustrates an adjustment system according to an embodiment of the invention;
Figure 3 illustrates a plan view of the adjustment system illustrated in Figure 2B; and
Figure 4 illustrates a recreational vehicle stabilized by axle stands according to an embodiment of the invention.

### Detailed description of the embodiments

The present invention will be described with respect to specific embodiments and with reference to specific drawings, although the invention is not limited thereto and is determined solely by the claims. The drawings described are merely schematic and are non-limiting. In the drawings, the size of particular elements may be exaggerated and not drawn to scale for illustrative purposes. The dimensions and the relative dimensions do not necessarily correspond to actual practical implementations of the invention.

Moreover, the terms first, second, third and the like in the description and in the claims are used to distinguish between similar elements and not necessarily to describe a sequential or chronological order. The terms are interchangeable under appropriate circumstances, and the embodiments of the invention may be applied in sequences different from those described or illustrated herein.

In addition, the terms at the top, at the bottom, over, under and the like in the description and the claims are used for illustrative purposes and not necessarily to describe relative positions. The terms so used are interchangeable under appropriate circumstances, and the embodiments of the invention described herein may be applied in orientations different from those described or illustrated herein.

Furthermore, the different embodiments, although referred to as "preferred embodiments", should be understood as an example of how the invention can be implemented rather than as a limitation of the scope of the invention.

The term "comprising" used in the claims should not be interpreted as being limited to the means or steps stated thereafter; the term does not exclude other elements or steps. The term should be interpreted as specifying the presence of the stated features, elements, steps or components to which reference is made, but does not exclude the presence or the addition of one or more other features, elements, steps or components, or groups thereof. The meaning of the expression "a device comprising means A and B" should therefore not be limited to devices consisting solely of the components A and B. The meaning is that only the components A and B of the device are listed with respect to the present invention, and the claim should furthermore be interpreted in such a way that it also contains equivalents of these components.

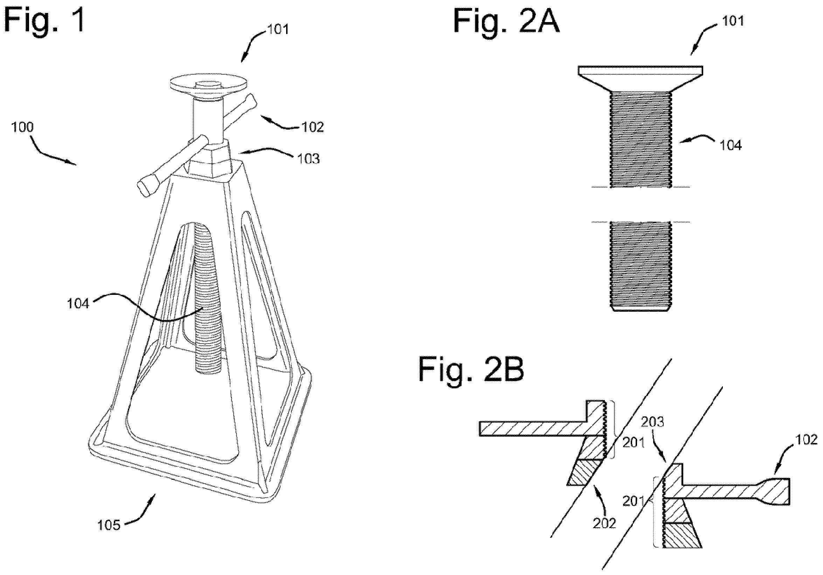

Figure 1 illustrates an axle stand 100 according to an embodiment of the invention. Said axle stand 100 comprises a stand foot 105, a stand shaft 104 and an adjustment system comprising an adjusting nut 103 and a lever 102. Furthermore, a stand shoe 101 is on the top side of the stand shaft 104.

The stand shaft 104 is illustrated in more detail in Figure 2A. As illustrated, said stand shaft 104 comprises a spindle comprising a screw thread. With reference to Figure 2B, which illustrates the adjustment system, this comprises a bore which also comprises a screw thread 201. Said screw thread 201 corresponds to the screw thread of the spindle 104. Via the lever 102, the spindle can then be rotated in the screw thread of the adjustment system.

As already mentioned, the stand shaft 104 also comprises a stand shoe 101. Said stand shoe 101 may further comprise a magnet so that this acts against the bottom side of the recreational vehicle to be stabilized.

Referring to Figure 2B again, the bore of the adjusting nut further comprises an inclined bore indicated by reference signs 202 and 203. The circumference and radius of this inclined bore 202 permit an inclined movement of the stand shaft 104. This allows the stand shaft 104 to slide to a certain position.

According to the illustrated embodiment in Figure 2B, the adjustment system comprises two handles that are connected robustly to the adjusting nut. However, it should be understood that other embodiments, such as handles arranged in a hinged manner or able to be connected reversibly to the adjusting nut via a mechanical connection, are also possible.

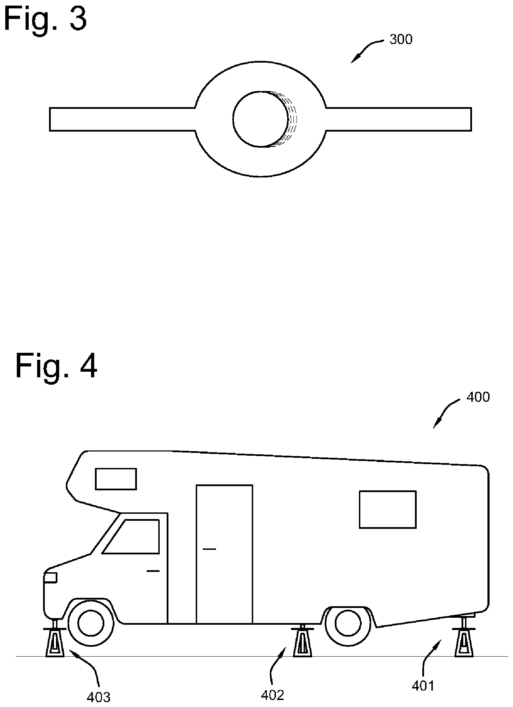

The adjustment system is illustrated in more detail, this time by way of a plan view 300, with reference to Figure 3. Here, the bore 201, as well as the inclined smooth bore 202 and 203, are also shown.

Finally, Figure 4 illustrates a recreational vehicle, in this case a mobile home 400, which is stabilized by four axle stands 401-403 according to an embodiment of the invention.

## Claims

1. Axle stand (100) configured for support of a recreational vehicle (400) on a surface and comprising a stand foot (105), an adjustment system (102, 103) and a stand shaft (104) which comprises a spindle that comprises a screw thread, the adjustment system comprising an adjusting nut (103) which is configured such that, via a rotating movement in relation to the spindle, it adjusts the height of the stand shaft (104) with respect to the stand foot (105) when the stand shaft (104) is oriented along an axial direction of a first cylindrical bore (201), the adjusting nut (103) comprising the first cylindrical bore (201) along the axial direction, this being provided partially with a screw thread corresponding to that of the spindle,
**CHARACTERIZED IN THAT**
the adjusting nut (103) further comprises a second cylindrical even bore (202, 203) at an angle of inclination to the axial direction of the first bore (201) and intersecting it, wherein the diameter is at least equal to the outer diameter of the spindle, which is configured so that the stand shaft (104), when tilted at the angle of inclination to the axial direction, can move freely in the direction of the second cylindrical bore.

2. Axle stand (100) according to Claim 1, wherein the axes of the respective cylindrical bores (201-203) are skew lines.

3. Axle stand (100) according to either of the preceding claims, the adjustment system further comprising a lever (102) which is configured to allow rotation of the adjusting nut (103) in relation to the spindle.

4. Axle stand (100) according to Claim 3, wherein the lever (102) comprises a first handle connected robustly to a ring, the ring being configured to clamp around the adjusting nut for the performing of the rotary movement.

5. Axle stand (100) according to Claim 4, wherein the lever (102) comprises a second handle connected robustly to the ring, the second handgrip being positioned oppositely in relation to the first handgrip.

6. Axle stand (100) according to either of Claims 4 and 5, wherein the lever (102) is connected robustly to the adjusting nut (103).

7. Axle stand (100) according to Claim 3, wherein the adjustment system further comprises a bore in the spindle that is configured for attachment of the lever.

8. Axle stand (100) according to one of the preceding claims, the stand shaft (104) further comprising a stand shoe (101) which is configured for support of an axle and/or chassis of the recreational vehicle (400).

9. Axle stand (100) according to Claim 8, the stand shoe (101) further comprising a magnet.

10. Axle stand (100) according to one of the preceding claims, wherein the stand foot (105) comprises a pyramid, of which the base is configured to be placed on the surface and the top is configured for supporting the adjusting nut.

11. Axle stand (100) according to one of the preceding claims, wherein the base of the stand foot (105) comprises hooks configured for gripping at the surface when arranged in place.

12. Axle stand (100) according to Claim 11, wherein the hooks are arranged in a hinged manner.

13. Axle stand (100) according to one of the preceding claims, wherein the angle of inclination between the axial direction of the first bore (201) and the second cylindrical even bore (202, 203) is between π/18 and π/4 rad.
